# EUROPEAN PATENT APPLICATION

(11) **EP 4 617 155 A1**
(43) Date of publication of application: **17.09.2025**
(21) Application number: 24163354.4
(22) Date of filing: 13.03.2024
(51) Int. Cl.: B62D 35/00

(54) **A VEHICLE COMPRISING AN AIR DEFLECTOR PANEL AND A METHOD FOR ADJUSTING THE POSITION OF THE AIR DEFLECTOR PANEL**

(71) Applicant: VOLVO TRUCK CORPORATION, 405 08 Göteborg (SE)
(72) Inventor: KOMMOJU, Shrinivas, 490020 BHILAI (IN); VENKITACHALAM, Muthukumar, 695014 KERALA (IN); PALASKAR, Pruthviraj Mohanrao, 560016 BANGALORE (IN); MURAGI, Milind, BANGALORE (IN); RAMANATHAN, Vijay, BANGALORE (IN)
(74) Representative: Germain Maureau

(57) **Abstract**

The invention relates to a vehicle (1) comprising:
- a chassis (2);
- a cab (4) mounted on the chassis (2);
- a load or a trailer (6) detachably attached to the chassis (2);
- an air deflector panel (10), which is movably attached to the cab (4);
- an actuator assembly (20) configured to adjust the position of the air deflector panel (10) relative to the cab (4);
- a camera monitoring system (40), which includes a camera (41) mounted on the cab (4), to provide a captured image (44) of an area located rearward of the cab (4);
- a control unit (30) configured to determine an optimal position of the air deflector panel (10) based on the captured image (44), and control the actuator assembly (20) to adjust the position of the air deflector panel (10) to the determined optimal position.

## Description

### TECHNICAL FIELD

The disclosure relates generally to a vehicle comprising an air deflector panel and a method for adjusting the position of the air deflector panel.

The disclosure can be applied in vehicles including a cab and carrying a load or towing a trailer, in particular in heavy-duty vehicles, such as trucks, buses, and construction equipment. Although the disclosure may be described with respect to a particular vehicle, the disclosure is not restricted to any particular vehicle.

### BACKGROUND

Air resistance of a vehicle, particularly of a truck or a truck-trailer combination, is one of the important factors influencing fuel consumption of the vehicle, when driving at highway speed. Especially, trucks or truck-trailer combinations, where height and/or width of the driver's cab and the storage compartment or trailer differ, show a large air resistance during driving. Further, Gap between truck and trailer have also an impact on aerodynamic performance and fuel consumption.

A common measure to reduce the air resistance of a truck or truck-trailer combination is to use air deflectors, which hide the frontal face area of the trailer from an oncoming air flow to get a more streamlined complete vehicle. Usually, there is at least one roof air deflector mounted to the roof of the driver's cab, which levels out the height difference between tractor and trailer and guides air over the vehicle. Additionally, the truck may comprise side air deflectors which are mounted to the sides of the driver's cab and guide air sideways along the vehicle.

The settings, i.e. the angular position, of the air deflectors have a significant effect on the total vehicle air resistance even for small angular variations. Therefore careful optimization of the settings is required for reducing the fuel consumption.

Currently, most trucks are equipped with tabular data for setting the air deflectors with respect to truck height, trailer height and distance between tractor and trailer. The tabular data are provided e.g. by the truck manufacturer as a manual table or can be stored in a memory. It is then up to the driver to manually adjust the deflectors according to the complete vehicle setup. Disadvantageously, the driver often neglects to adjust the air deflectors so that the air deflectors are not or wrongly adjusted, which in turn increases the driving cost, significantly.

It has therefore been suggested in the state of the art, e.g. in the Patent Application US 2005/0173945, to store the air deflector settings in a memory and to interrogate the geometrical data of truck and trailer from the driver by a human machine interface. Thereby, the method ensures that a driver does not neglect the adjustment of the air deflectors. As soon as the geometrical data are identified, the method reads out the corresponding setting for the air deflectors from the tabular stored in the memory and adjusts the air deflectors in accordance. The settings are predetermined for a plurality of different truck-trailer combination possibilities.

However, one major disadvantage of this system is the interrogation procedure or the manual adjustment of the air deflectors, especially, if the driver interrogation procedure takes place during driving, the driver being distracted from his primary driving tasks, which interferes with safety aspects.

### SUMMARY

An object of the invention is to provide a vehicle comprising an air deflector panel and a method for adjusting the position of the air deflector that alleviate the mentioned drawbacks of the prior art.

According to a first aspect of the invention, the object is achieved by vehicle comprising:
- a chassis which has a longitudinal axis and which is supported by wheels;
- a cab mounted on the chassis;
- a load or a trailer detachably attached to the chassis;
- an air deflector panel, which is movably attached to the cab;
- an actuator assembly configured to adjust the position of the air deflector panel relative to the cab;
- a camera monitoring system, which includes a camera mounted on the cab, to provide a captured image of an area located rearward of the cab;
- a storage device containing stored information of different cab, load and/or trailer types and a table for different cab-load and/or cab-trailer combinations, the table containing data relative to an optimal position of the air deflector panel for each cab-load and/or cab-trailer combination ;
- a control unit connected to the camera monitoring system and to the storage device;
wherein the control unit is configured to :
- determine dimensional values relative to the cab and to the load or trailer by processing the image captured by the camera,
- determine the cab type and the load or trailer type by comparing the determined dimensional values with the stored information of the storage device,
- determine an optimal position of the air deflector panel based on the data of the table corresponding to said determined cab type and said determined load or trailer type, and
- control the actuator assembly to adjust the position of the air deflector panel to the determined optimal position.

Thus configured, the vehicle of the present invention permits to determine the current cab-load or cab-trailer combination of the vehicle by processing and analysing an image captured by a camera mounted on the vehicle cab and to adjust the position of the air deflector to an optimal position corresponding to said current cab-load or cab-trailer combination. This optimal position of the air deflector can be set in an easy and reliable manner, and without any manual adjustment of the air deflector or any other manual operations of the driver.

According to one embodiment, the dimensional values relative to the cab and to the load or trailer comprise the height of the cab above a reference plane, the height of the load or trailer above said reference plane, and a distance between the cab and the load or trailer along a longitudinal direction.

According to one embodiment, the dimensional values relative to the cab and to the load or trailer comprise trailer longitudinal position relative to cab based on 5th wheel position.

According to a further embodiment, the control unit includes a software module for identifying the contours of the cab and/or of the load or trailer in the image and analysing said contours to determine dimensional values relative to the cab and to the load or trailer.

According to a further embodiment, the software module incorporates an artificial intelligence algorithm.

According to a further embodiment, the artificial intelligence algorithm is trained to recognize and adapt to various cab and load or trailer shapes, sizes, and environmental conditions.

According to a further embodiment, the artificial intelligence algorithm is configured to continuously learn and improve its performance based on feedback from a plurality of images captured by the camera.

According to a further embodiment, the camera is adapted to provide a class II or IV field of vision as defined in the Regulation UN ECE n°46.

According to a further embodiment, the air deflector panel has a front end and a rear end and wherein the actuator assembly is configured to adjust a height between the rear end of the air deflector panel and a top surface of the cab.

According to a further embodiment, the actuator assembly comprises a slider threadedly connected to a threaded shaft and a motor adapted to rotate the threaded shaft, thus modifying the position of the slider along a displacement direction, the slider being connected to the air deflector panel via a linking element, a first end thereof being pivotally connected to the slider and a second end thereof being pivotally connected to the air deflector panel.

According to a further embodiment, the first end of the linking element pivots about a first axis and the second end of the linking element pivots about a second axis, the second axis being positioned relative to the first axis such that, when the slider moves rearward, the rear end of the air deflector panel moves upward, and, when the slider moves frontward, the rear end of the air deflector panel moves downward.

According to a further embodiment, the control unit is configured to control the motor to adjust the position of the slider along the displacement direction, thus modifying the position of the air deflector panel.

According to a second aspect of the invention, the object is achieved by a method for controlling the position of an air deflector panel movably attached to a cab of a vehicle, the vehicle carrying a load or towing a trailer, the method comprising the steps of:
- capturing an image of an area located rearward of the cab using a camera of a camera monitoring system,
- processing, by a control unit connected to the camera monitoring system, the captured image to determine dimensional values relative to the cab and to the load or trailer,
- comparing, by the control unit, the determined dimensional values with stored information of a storage device, said stored information comprising dimensional values relative to different cab, load and/or trailer types, to determine the cab type and the load or trailer type of the vehicle,
- reading out, by the control unit, data of a table of the storage device, said data comprising positional data relative to an optimal position of the air deflector panel for different cab-load and/or cab-trailer combinations, to determine the optimal position of the air deflector panel,
- converting, by the control unit, the readout data into setting commands for an actuator assembly connected to the control unit and configured to adjust the position of the air deflector panel,
- adjusting the position of the air deflector panel to the determined optimal position by controlling, by the control unit, the actuator assembly based on said setting commands.

According to one embodiment, the dimensional values relative to the cab and to the load or trailer comprise the height of the cab above a reference plane, the height of the load or trailer above said reference plane, and a distance between the cab and the load or trailer along a longitudinal direction.

According to a further embodiment, the step of processing the image comprises the identification by a software module of the contours of the cab and/or the load or trailer in the image and the analysis of said contours to determine the dimensional values relative to the cab and to the load or trailer.

According to a further embodiment, the software module incorporates an artificial intelligence algorithm.

According to a further embodiment, the artificial intelligence algorithm is trained to recognize and adapt to various cab and load or trailer shapes, sizes, and environmental conditions.

According to a further embodiment, the artificial intelligence algorithm is configured to continuously learn and improve its performance based on feedback from a plurality of images captured by the camera.

According to a further embodiment, the camera is adapted to provide a class II or IV field of vision as defined in the Regulation UN ECE n°46.

According to a further embodiment, the air deflector panel has a front end and a rear end and wherein the step of adjusting the position of the air deflector panel comprises the adjustment of a height between the rear end of the air deflector panel and a top surface of the cab.

According to a further embodiment, the actuator assembly comprises a slider threadedly connected to a threaded shaft and a motor adapted to rotate the threaded shaft, the slider being connected to the air deflector panel via a linking element, a first end thereof being pivotally connected to the slider and a second end thereof being pivotally connected to the air deflector panel, and wherein the step of adjusting the position of the air deflector panel comprises the adjustment of the position of the slider along a displacement direction by controlling, by the control unit, the rotation of the motor
Further advantages and advantageous features of the invention are disclosed in the following description.

### BRIEF DESCRIPTION OF THE DRAWINGS

With reference to the appended drawings, below follows a more detailed description of embodiments of the invention cited as examples.

In the drawings:
Fig. 1 is a schematic side view of a vehicle according to an embodiment of the invention;
Fig. 2A is an enlarged view of the air deflector panel of the vehicle illustrated in Fig.1, in a non-optimal position thereof;
Fig. 2B is a similar view to Fig. 2A, in an optimal position of the air deflector panel;
Fig. 3 is a flow chart of a method according to an embodiment of the present invention.

### DETAILED DESCRIPTION OF EXAMPLE EMBODIMENTS OF THE INVENTION

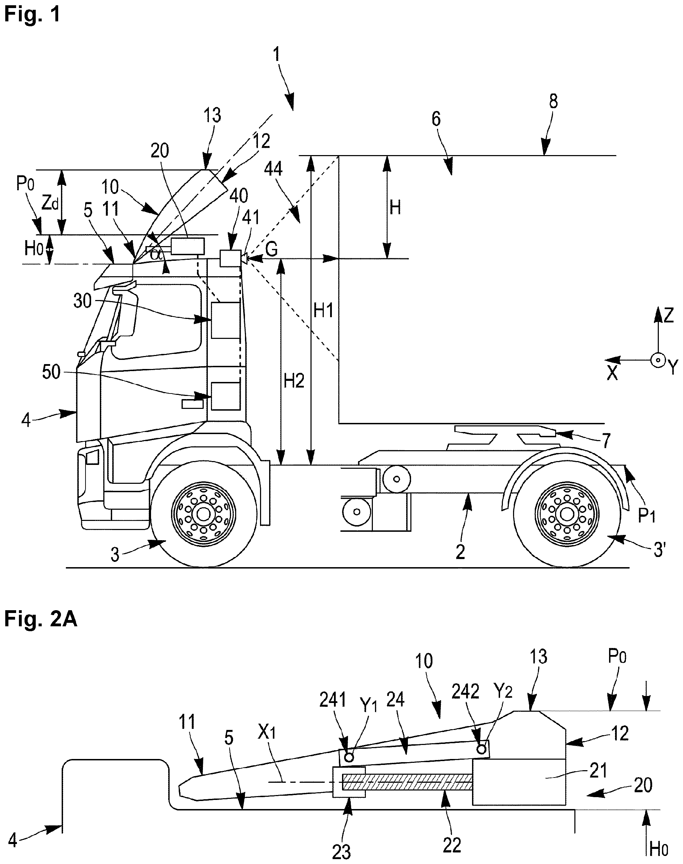

A vehicle 1, i.e. a truck as illustrated in Fig. 1, comprises a chassis 2 supported by front wheels 3 and rear wheels 3'. A cab 4 defining a driver's compartment is mounted on the chassis 2, on the front. The chassis 2 can include a trailer connector 7 located rearward of the cab 4. The vehicle 1 can thus include a trailer 6 mechanically and electrically connected to the chassis 2, or no trailer connected to the chassis 2, the vehicle 1 thus carrying a load. The trailer 6 comprises rear wheels (not shown). The trailer 6 can be pivotally connected to the chassis 2.

Z is defined as the vertical direction, X is defined as the longitudinal direction of the vehicle 1 and Y is defined as the transverse direction of the vehicle 1. The chassis 2 has a longitudinal axis that is parallel the longitudinal direction and the trailer 6 will advantageously have the same longitudinal axis when the method of the present invention is applied.

The vehicle 1 may comprise a controller 30 for controlling the various electric systems of the vehicle 1.

The vehicle 1 also comprises a wind deflecting assembly for improving aerodynamics. The wind deflecting assembly comprises an air deflector panel 10 arranged on the roof 5 of the cab 4.

The air deflector panel 10 comprises a major essentially planar air-deflecting surface, which has a front edge 11 and a rear edge 12 essentially opposite the front edge 11. When arranged on the cab 4, the air deflector panel 10 is arranged to be movable relative to the roof 5 such that it form a variable angle of inclination α relative to the roof 5 of the cab 4. The air deflector panel 10 may be mounted by means of a lever structure to the cab 4, said lever structure being configured to adjust a height Zd between a top edge 13 of the rear end 12 of the air deflector panel 10 and a horizontal reference plane P0. This lever structure may be a part of an actuator assembly 20 that is controlled by the control unit 30, via electrical connecting means or via wireless communication means.

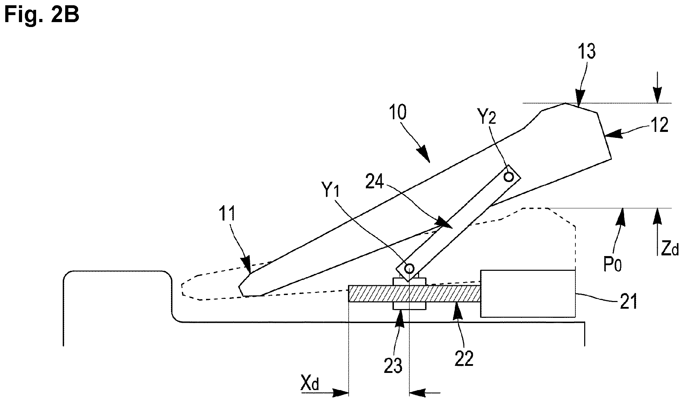

An exemplary embodiment of such an actuator assembly 20 is illustrated in Figs 2A and 2B. The actuator assembly 20 comprises an electrically driven motor 21 that is adapted to rotate a threaded shaft 22 about a rotation axis X1 and a slider 23 that is threadedly connected to the threaded shaft 22. Thus, by rotating the threaded shaft 22 through the motor 21, the position of the slider 23 along the rotation axis X1 is modified. The slider 23 is connected to the air deflector panel 10 via a linking element 24 having a substantially rectangular shape. A front end 241 of the linking element 24 is pivotally connected to the slider 23 about a first axis Y1 and a rear end 242 thereof being pivotally connected to the air deflector panel 10 about a second axis Y2. The second axis Y2 is positioned rearward to the first axis Y1.

In the position illustrated in Fig. 2A, the air deflector panel 10 is substantially parallel to the roof 5, the top edge 13 thereof being aligned with the reference plane P0. Thus positioned, the air deflector panel 10 may not be correctly adjusted to guide air over the trailer 6, in particular, when the height of the trailer 6 relative to the ground is much greater than the height of the cab 4 relative to the ground. Such a configuration is shown in Fig. 1. Considering the vertical distance H1 between a roof 8 of the trailer 6 and a horizontal reference plane P1 defined by the chassis 2 and the vertical distance H2 between the roof 5 of the cab 4 and said reference plane P1, it may be determined the vertical distance H between the roof 8 and the roof 5. In particular, H=H1-H2. Therefore, when the value H is greater than a threshold value H0 corresponding to the distance between the top edge 13 of the air deflector panel 10 and the roof 5 when the air deflector panel 10 is positioned as in Fig. 2A, it is necessary to modify the height Zd between the top edge 13 and the reference plane P0 to optimize the air guiding effect of the air deflector panel 10.

Fig. 2B illustrates the position of the air deflector panel 10 after its adjustment through the actuator assembly 20 to reach an optimal position in which the rear end 12 of the air deflector panel 10 is positioned such that the air flow is directed to move optimally above the roof 8 of the trailer 6. In this optimal position, the airflow is guided around the vehicle during driving, i.e. the air deflector panel 10 redirects the air which is moving over the moving vehicle in such a way that the air does not hit the trailer 6 but instead the air is moving over the roof 8 of the trailer 6. At the same time, the top air deflector panel 10 is not positioned too high to unnecessarily increase the air resistance.

The movement of the air deflector panel 10 from its position shown in Fig. 2A to its position shown in Fig. 2B results from the rotation of the threaded shaft 22 via the rotation of the motor 21 such that the slider 23 moves rearward. This rearward movement of the slider 23 leads the linking element 24 to move rearward and upward, the first axis Y1 moving rearward along the rotation axis X1 over a distance Xd and the second axis Y2 mainly moving upward. This movement of the linking element 24 leads the front end 11 of the air deflector panel 10 to move rearward and the rear end 12 thereof to mainly move upward. Therefore, in this optimal position, the top edge 13 is distant from the reference plane P0 by a height Zd.

The height ZD corresponding to the optimal position of the air deflector panel 10 is determined by the control unit 30 based on specific dimensional values relative to the vehicle 1 and based on stored information of a storage device 50 that is connected to, or in communication with, the control unit 30.

The storage device 50 may contain various data relative to different cab types, and load or trailer types. In particular, for each cab type, the storage device 50 may contain data relative to the height H2 of the cab 4 above the reference plane P1, and, for each load or trailer type, the storage device 50 may contain data relative to the height H1 of the load or trailer 6 above the reference plane P1.

The storage device 50 may also contain various data relative to different cab-load or cab-trailer combinations. In particular, for each cab-load or cab-trailer combination, the storage device 50 may contain data relative to a distance G between the cab 4 and the load or trailer 6 along a longitudinal direction, as shown in Fig. 1.

The storage device 50 may also contain a table containing positional data relative to the optimal position of the air deflector panel 10 for each cab-load or cab-trailer combination. These positional data may be converted, by the control unit 30, into setting commands for the actuator assembly 20 to adjust the position of the air deflector panel 10. In particular, these positional data may correspond to the height Zd. The control unit 30 may thus convert this height Zd into corresponding setting commands for the motor 21. These setting commands lead to a rotation of the motor 21 that allows the rearward movement of the slider 23 along the threaded shaft 22 over a distance Xd.

As illustrated in Fig. 1, the vehicle 1 further comprises a camera monitoring system 40 (or CMS) that is connected to, or in communication with, the control unit 30. The camera monitoring system 40 includes a camera 41 mounted on the cab 4, preferably near the rear side of the roof 5. The camera 41 is adapted to provide a captured image 44 of an area located rearward of the cab 4. The camera 41 may be adapted to provide a class II or IV field of vision as defined in the Regulation UN ECE n°46.

The camera monitoring system 40 may further comprise a screen (not shown) inside the passenger compartment of the cab 4, for displaying an image obtained from the captured image 44 provided by the camera 41.

The camera monitoring system 40 may also comprise a controller (not shown), which can be connected to the control unit 30 of the vehicle 1. This controller is adapted to convert the signals received from the camera 41 into data that can be processed and analysed thereafter by the control unit 30.

The control unit 30 includes a software module for processing the data received from the CMS 40 to identify the contours of the cab 4 and/or of the load or trailer 6 in the image 44 and analyse said contours to determine dimensional values relative to the cab 4 and/or to the load or trailer 6. In particular, this software module may determine the height H2 of the cab 4 above the reference plane P1, the height H2 of the load or trailer 6 above said reference plane P1, and the distance G between the cab 4 and the load or trailer 6 along a longitudinal direction.

In an advantageous embodiment of the invention, the software module may incorporate an artificial intelligence algorithm. The artificial intelligence algorithm may be trained to recognize and adapt to various cab and load or trailer shapes, sizes, and environmental conditions. The artificial intelligence algorithm may also be configured to continuously learn and improve its performance based on feedback from a plurality of images captured by the camera 41.

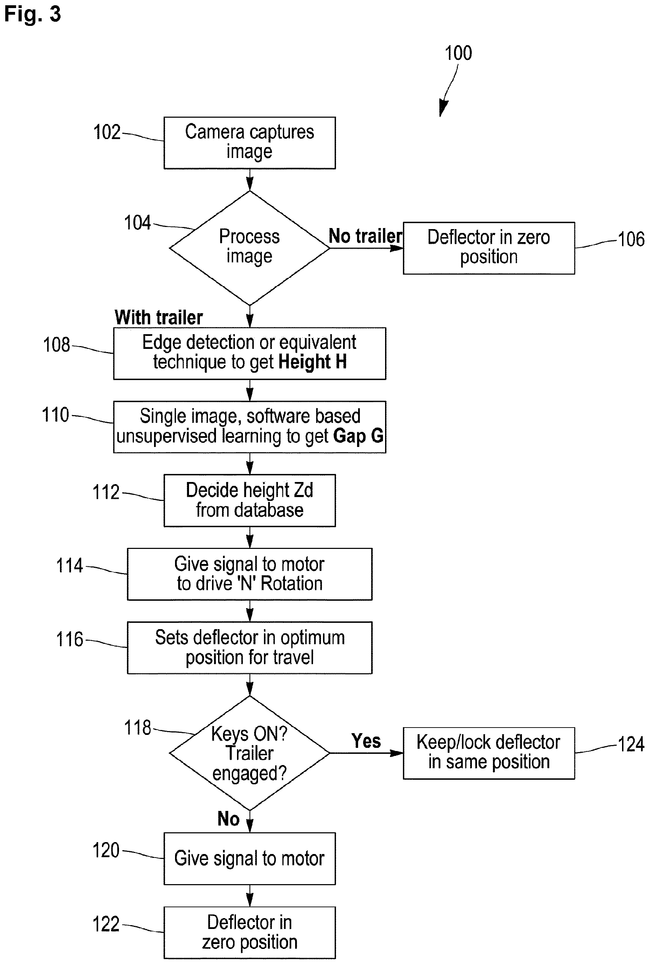

Fig. 3 illustrates a flow chart of a method 100 for controlling the position of the air deflector panel 10 of the vehicle 1 illustrated in Fig. 1 according to an embodiment of the present invention. The method 100 comprises the steps of:
- capturing (in step 102) an image 44 of an area located rearward of the cab 4 using the camera 41 of the CMS 40,
- processing (in step 104), by the control unit 30, the captured image 44 to determine whether a trailer 6 is towed by the vehicle 1,
- if a trailer 6 is not towed by the vehicle 1, controlling (in step 106) the actuator assembly 20 to move the air deflector panel 10 in the non-optimal position shown in Fig. 2A,
- if a trailer 6 is towed by the vehicle 1, processing (in steps 108 and 110), by the control unit 30, the captured image 44 to determine dimensional values relative to the cab 4 and to the trailer 6,
- determining (in step 112) the optimal position of the air deflector panel 10 by successively comparing, by the control unit 30, the dimensional values determined in steps 108 and 110 with stored information of a storage device, said stored information comprising dimensional values relative to different cab, load and/or trailer types, to determine the cab type and the load or trailer type of the vehicle 1, and reading out, by the control unit 30, data of a table of the storage device, said data comprising positional data relative to an optimal position of the air deflector panel 10 for different cab-load and/or cab-trailer combinations, to determine the optimal position of the air deflector panel 10,
- converting (in step 114), by the control unit 30, the readout data of the table into setting commands for the actuator assembly 20 and adjusting the position of the air deflector panel 10 to the determined optimal position by controlling, by the control unit 30, the actuator assembly 20 based on said setting commands,
- maintaining (in step 116) the air deflector panel 10 in this optimal position till the trailer 6 is connected to the chassis 2 of the vehicle 1,
- detecting (in step 118) when the trailer 6 is disconnected from the chassis 2,
- controlling (in step 120) the actuator assembly 20 to adjust the position of the air deflector panel 10 if the trailer 6 is disconnected from the chassis 2,
- adjusting (in step 122) the position of the air deflector panel 10 to reach the non-optimal position shown in Fig. 2A.
- keeping/locking (in step 124) the position of the air deflector panel 10 if the trailer 6 is still connected to the chassis.

In one embodiment, the dimensional values determined in steps 108 and 110 comprise the height H2 of the cab 4 above the reference plane P1, the height H1 of the load or trailer 6 above said reference plane P1, and the distance G between the cab 4 and the load or trailer 6 along the longitudinal direction X.

In one embodiment, the steps 108 and 110 comprises the identification by a software module of the contours of the cab 4 and/or the load or trailer 6 in the image 44 and the analysis of said contours to determine the dimensional values relative to the cab 4 and to the load or trailer 6.

In one embodiment, the software module incorporates an artificial intelligence algorithm.

In one embodiment, the artificial intelligence algorithm is trained to recognize and adapt to various cab and load or trailer shapes, sizes, and environmental conditions.

In one embodiment, the artificial intelligence algorithm is configured to continuously learn and improve its performance based on feedback from a plurality of images captured by the camera 41.

In one embodiment, the camera 41 is adapted to provide a class II or IV field of vision as defined in the Regulation UN ECE n°46.

In one embodiment, the air deflector panel 10 has a front end 11 and a rear end 12 and the step of adjusting the position of the air deflector panel 10 comprises the adjustment of a height between the rear end 12 of the air deflector panel 10 and a top surface of the cab 4. In a specific embodiment, this adjustment may consist in adjusting the height Zd between the top edge 13 of the air deflector panel 10 and a horizontal plane P0, which is vertically distant from the roof 5 of the cab 4 by a height H0.

In one embodiment, the actuator assembly comprises a slider 23 threadedly connected to a threaded shaft 22 and a motor 21 adapted to rotate the threaded shaft 22 about a rotation axis X1, the slider 23 being connected to the air deflector panel 10 via a linking element 24, a first end 241 thereof being pivotally connected to the slider 23 and a second end 242 thereof being pivotally connected to the air deflector panel 10, and the step of adjusting the position of the air deflector panel 10 comprises the adjustment of the position of the slider 23 along the rotation axis X1 by controlling, by the control unit 30, the rotation of the motor 21.

It is to be understood that the present invention is not limited to the embodiments described above and illustrated in the drawings; rather, the skilled person will recognize that many changes and modifications may be made within the scope of the appended claims.

## Claims

1. A vehicle (1) comprising:
- a chassis (2) which has a longitudinal axis and which is supported by wheels (3, 3');
- a cab (4) mounted on the chassis (2);
- a load or a trailer (6) detachably attached to the chassis (2);
- an air deflector panel (10), which is movably attached to the cab (4);
- an actuator assembly (20) configured to adjust the position of the air deflector panel (10) relative to the cab (4);
- a camera monitoring system (40), which includes a camera (41) mounted on the cab (4), to provide a captured image (44) of an area located rearward of the cab (4);
- a storage device (50) containing stored information of different cab, load and/or trailer types and a table for different cab-load and/or cab-trailer combinations, the table containing data relative to an optimal position of the air deflector panel (10) for each cab-load and/or cab-trailer combination ;
- a control unit (30) connected to, or in communication with, the camera monitoring system (40) and the storage device (50) ;
wherein the control unit (30) is configured to :
• determine dimensional values (H1, H2, G) relative to the cab (4) and to the load or trailer (6) by processing the image (44) captured by the camera (41),
• determine the cab type and the load or trailer type by comparing the determined dimensional values (H1, H2, G) with the stored information of the storage device (50),
• determine an optimal position of the air deflector panel (10) based on the data of the table corresponding to said determined cab type and said determined load or trailer type, and
• control the actuator assembly (20) to adjust the position of the air deflector panel (10) to the determined optimal position.

2. The vehicle (1) according to claim 1, wherein the dimensional values relative to the cab (4) and to the load or trailer (6) comprise the height (H2) of the cab (4) above a reference plane (P1), the height (H1) of the load or trailer (6) above said reference plane (P1), and a distance (G) between the cab (4) and the load or trailer (6) along a longitudinal direction (X).

3. The vehicle (1) according to claim 1 or 2, wherein the control unit (30) includes a software module for identifying the contours of the cab (4) and/or of the load or trailer (8) in the image (44) and analysing said contours to determine dimensional values (H1, H2, G) relative to the cab (4) and to the load or trailer (6).

4. The vehicle (1) according to claim 3, wherein the software module incorporates an artificial intelligence algorithm.

5. The vehicle (1) according to claim 4, wherein the artificial intelligence algorithm is trained to recognize and adapt to various cab and load or trailer shapes, sizes, and environmental conditions.

6. The vehicle (1) according to claim 4 or 5, wherein the artificial intelligence algorithm is configured to continuously learn and improve its performance based on feedback from a plurality of images captured by the camera (41).

7. The vehicle (1) according to any of the preceding claims, wherein the camera (41) is adapted to provide a class II or IV field of vision as defined in the Regulation UN ECE n°46.

8. The vehicle (1) according to any of the preceding claims, wherein the air deflector panel (10) has a front end (11) and a rear end (12) and wherein the actuator assembly (20) is configured to adjust a height between the rear end (12) of the air deflector panel (10) and a top surface (5) of the cab (4).

9. The vehicle (1) according to claim 8, wherein the actuator assembly (20) comprises a slider (23) threadedly connected to a threaded shaft (22) and a motor (21) adapted to rotate the threaded shaft (22), thus modifying the position of the slider (23) along a displacement direction (X1), the slider (23) being connected to the air deflector panel (10) via a linking element (24), a first end (241) thereof being pivotally connected to the slider (23) and a second end (242) thereof being pivotally connected to the air deflector panel (10).

10. The vehicle (1) according to claim 9, wherein the first end (241) of the linking element (24) pivots about a first axis (Y1) and the second end (242) of the linking element (24) pivots about a second axis (Y2), the second axis (Y2) being positioned relative to the first axis (Y1) such that, when the slider (23) moves rearward, the rear end (12) of the air deflector panel (10) moves upward, and, when the slider (23) moves frontward, the rear end (12) of the air deflector panel (10) moves downward.

11. The vehicle (1) according to claim 9 or 10, wherein the control unit (30) is configured to control the motor (21) to adjust the position (Xd) of the slider (23) along the displacement direction (X1), thus modifying the position of the air deflector panel (10).

12. A method for controlling the position of an air deflector panel (10) movably attached to a cab (4) of a vehicle (1), the vehicle (1) carrying a load or towing a trailer (6), the method comprising the steps of:
- capturing an image (44) of an area located rearward of the cab (4) using a camera (41) of a camera monitoring system (40),
- processing, by a control unit (30) connected to, or in communication with, the camera monitoring system (40), the captured image (44) to determine dimensional values (H1, H2, G) relative to the cab (4) and to the load or trailer (6),
- comparing, by the control unit (30), the determined dimensional values (H1, H2, G) with stored information of a storage device (50), said stored information comprising dimensional values relative to different cab, load and/or trailer types, to determine the cab type and the load or trailer type of the vehicle (1),
- reading out, by the control unit (30), data of a table of the storage device (50), said data comprising positional data (Zd) relative to an optimal position of the air deflector panel (10) for different cab-load and/or cab-trailer combinations, to determine the optimal position of the air deflector panel (10),
- converting, by the control unit (30), the readout data into setting commands for an actuator assembly (20) connected to, or in communication with, the control unit (30) and configured to adjust the position of the air deflector panel (10),
- adjusting the position of the air deflector panel (10) to the determined optimal position by controlling, by the control unit (30), the actuator assembly (20) based on said setting commands.

13. The method according to claim 12, wherein the dimensional values relative to the cab (4) and to the load or trailer (6) comprise the height (H2) of the cab (4) above a reference plane (P1), the height (H1) of the load or trailer (6) above said reference plane (P1), and a distance (G) between the cab (4) and the load or trailer (6) along a longitudinal direction (X).

14. The method according to claim 12 or 13, wherein the step of processing the image (44) comprises the identification by a software module of the contours of the cab (4) and/or the load or trailer (6) in the image (44) and the analysis of said contours to determine the dimensional values (H1, H2, G) relative to the cab (4) and to the load or trailer (6).

15. The method according to claim 14, wherein the software module incorporates an artificial intelligence algorithm.

16. The method according to claim 15, wherein the artificial intelligence algorithm is trained to recognize and adapt to various cab and load or trailer shapes, sizes, and environmental conditions.

17. The method according to claim 15 or 16, wherein the artificial intelligence algorithm is configured to continuously learn and improve its performance based on feedback from a plurality of images captured by the camera (41).

18. The method according to any of claims 12 to 17, wherein the camera (41) is adapted to provide a class II or IV field of vision as defined in the Regulation UN ECE n°46.

19. The method according to any of claims 12 to 18, wherein the air deflector panel (10) has a front end (11) and a rear end (12) and wherein the step of adjusting the position of the air deflector panel (10) comprises the adjustment of a height between the rear end (12) of the air deflector panel (10) and a top surface (5) of the cab (4).

20. The method according to claim 19, wherein the actuator assembly (20) comprises a slider (23) threadedly connected to a threaded shaft (22) and a motor (21) adapted to rotate the threaded shaft (22), the slider (23) being connected to the air deflector panel (10) via a linking element (24), a first end (241) thereof being pivotally connected to the slider (23) and a second end (242) thereof being pivotally connected to the air deflector panel (10), and wherein the step of adjusting the position of the air deflector panel (10) comprises the adjustment of the position of the slider (23) along a displacement direction (X1) by controlling, by the control unit (30), the rotation of the motor (21).
